# EUROPEAN PATENT SPECIFICATION

(11) **EP 4 344 943 B1**
(45) Date of publication and mention of the grant of the patent: **17.09.2025**
(21) Application number: 23185016.5
(22) Date of filing: 12.07.2023
(51) Int. Cl.: B60N 2/28

(54) **ISOFIX TELESCOPIC MECHANISM AND SAFETY SEAT**
ISOFIX-TELESKOPMECHANISMUS UND SICHERHEITSSITZ
MÉCANISME TÉLESCOPIQUE ISOFIX ET SIÈGE DE SÉCURITÉ

(30) Priority: 29.09.2022 CN 202222649307 U
(43) Date of publication of application: 03.04.2024
(73) Proprietor: Ningbo Baby First Baby Products Co., Ltd., Ningbo, Zhejiang 315412 (CN)
(72) Inventor: PAN, Xiaolu, Ningbo, Zhejiang, 315412 (CN); WANG, Youping, Ningbo, Zhejiang, 315412 (CN)
(74) Representative: Ipside

(56) References cited:
- CN-A- 105 109 371
- KR-A- 20190 067 689
- US-A1- 2022 295 739

## Description

### Technical Field

The present application relates to the technical field of child safety seats, in particular to an international standards organization FIX (ISOFIX) telescopic mechanism and a safety seat.

### Background Art

At present, a car child safety seat, also known as a child restraint system (CRS), is a kind of seat which is specially designed for children at different ages (or having different weights) and mounted in a car, and can effectively improve safety of children in the car. The car child safety seat is usually fixed with an international standards organization FIX (ISOFIX) connection device. An ISOFIX system, a rapid rigid connection system, includes two rigid connection points on the car and two adaptive rigid connection devices on the child restraint system.

The ISOFIX system generally includes an inner telescopic tube and an outer telescopic tube that telescopically match each other. The outer telescopic tube is provided with an elongated guide recess, and the inner telescopic tube is provided with two connecting rods that pass through the elongated guide recess on the outer telescopic tube to be connected to an ISOFIX unlocking switch. The ISOFIX system can prevent the inner telescopic tube from falling off the outer telescopic tube when sliding to the end of a stroke through an independent stopper that simultaneously penetrates the inner telescopic tube and the elongated guide recess, or directly use one connecting rod for limiting.

In the prior art, two ends of the guide recess are closed, and the ISOFIX system is inconvenient to assemble, since the inner telescopic tube is required to be inserted into the outer telescopic tube and aligned with the later before assembly of the connecting rod, the stopper, etc. Alternatively, in order to facilitate mounting of the connecting rod and the stopper, the outer telescopic tube is directly arranged in a split type, and the connecting rod and the stopper are mounted before closing of two halves of the outer telescopic tube, resulting in a complex structure.

Patent document US 2022/295739 A1 discloses a pet carrier for securing and transporting a pet in a vehicle having seat with a lower seat anchor. The pet carrier includes a base, a cover extending upwardly from the base, an entryway formed through the cover, and a handle secured to the carrier. An extendible/retractable rail assembly is fixedly attached to the base of the pet carrier. The rail assembly includes a clamp at a distal rear end of the rail assembly, a securement mechanism and a release mechanism. The clamp is configured to attach and lock onto the lower seat anchor of the vehicle. The clamp is selectively extendible from and retractable into the rail assembly to facilitate attachment and release of the pet carrier to the seat.

Patent document CN 105 109 371 A discloses an ISOFIX chuck and a length adjustment mechanism thereof. The ISOFIX chuck comprises a shell formed by approximating and splicing two side plates, and the inner part of the shell is provided with a lock hook main body, a position limiting strip, an insert slice, a lock tension spring, a position limiting tension spring and a release press button. The length adjustment mechanism of the ISOFIX chuck is arranged on the outer part of the ISOFIX chuck and comprises an FIX connection pipe for connecting with a car seat main body; two sliding racks which are symmetrically fixed on the two ends of the FIX connection pipe, and one ISOFIX chuck is slideably arranged in each sliding rack. The ISOFIX chuck is locked through an ISOFIX interface, the external length adjustment mechanism and an inner gear linkage mechanism, the length of the chuck is adjustable.

Patent document KR 2019 0067689 A discloses an ISOFIX connector and an infant car seat. The ISOFIX connector comprises a fixed case, a sliding case slidably installed in the fixed case, and a locking member for locking or unlocking an anchor rod rotatably installed in the sliding case and inserted into the sliding case. The ISOFIX connector more comprises a first position restriction member, an interlocking sliding block, an interlocking member, and an interlocking torsion spring, wherein the locking member and the first position restriction member are interlocked through the interlocking member, and synchronization positioning of the locking member and the first position restriction member is realized through the interlocking torsion spring.

### Summary

An objective of the present application is to provide an international standards organization FIX (ISOFIX) telescopic mechanism, which has the advantages of a simple structure of a stopper, easy mounting, and convenient assembly of an inner sleeve and an outer sleeve.

Another objective of the present application is to provide a safety seat. The safety seat includes the ISOFIX telescopic mechanism as stated above.

In order to achieve one of the objectives of the present application, a technical solution used by the present application is as follows: an ISOFIX telescopic mechanism includes an outer sleeve and an inner sleeve, where the inner sleeve is adapted to slide relative to the outer sleeve, the inner sleeve is provided with a first limiting mechanism, the outer sleeve is provided with a first chute, the first chute extends to a first end face of the outer sleeve, the first limiting mechanism includes a bulge projecting out of the first chute, and the outer sleeve is provided with a second limiting mechanism adapted to abut against the bulge.

Preferably, an end of the first chute away from the first end face is provided with a limiting surface, and the limiting surface forms the second limiting mechanism.

Preferably, the inner sleeve is provided with a connecting rod, the outer sleeve is provided with a second chute, the second chute extends to the first end face of the outer sleeve, and the connecting rod penetrates through the second chute.

Preferably, the bulge and the connecting rod are arranged on the same surface of the inner sleeve and at different heights, and the first chute is in communication with the second chute.

Preferably, the first limiting mechanism is arranged between the first end face and the connecting rod in a length direction of the inner sleeve, and a length of the first chute is less than a length of the second chute.

Preferably, the first chute and the second chute are substantially elongated, and an end of the first chute and an end of the second chute are provided with rounded corners through chamfering.

Preferably, the first limiting mechanism and the inner sleeve are integrally formed.

Preferably, the bulge is a cambered bulge.

Preferably, the first end face is located at an end away from an anchor rod of a vehicle, and the outer sleeve is integrally formed.

In order to achieve the other objective of the present application, a technical solution used thereby is as follows: a safety seat including an ISOFIX telescopic mechanism.

Compared with the prior art, the present application has the following beneficial effects: the first chute extends to the first end face of the outer sleeve, such that the first limiting mechanism can be arranged on the inner sleeve first, and then the inner sleeve is inserted into the outer sleeve, thus enabling the assembly to be more convenient; the bulge abuts against the second limiting mechanism when the inner sleeve slides to an end of a stroke, such that a sliding limit function is implemented, and the inner sleeve can be prevented from falling off, thereby achieving a simple limiting structure; and similarly, the second chute extends to the first end face of the outer sleeve, facilitating assembly of the connecting rod, the whole inner sleeve is assembled and then directly inserted into the outer sleeve, and the inner sleeve and the outer sleeve can be quickly assembled.

### Brief Description of the Drawings

FIG. 1 is a schematic structural diagram of an outer sleeve according to a preferred embodiment of the present application;
FIG. 2 is a schematic structural diagram of an inner sleeve according to a preferred embodiment of the present application;
FIG. 3 is a schematic structural diagram of an international standards organization FIX (ISOFIX) telescopic mechanism according to a preferred embodiment of the present application;
FIG. 4 is a schematic structural diagram of another state of FIG. 3;
FIG. 5 is an enlarged schematic diagram of a partial structure A of FIG. 4; and
FIG. 6 is a schematic structural diagram of an ISOFIX telescopic mechanism according to another preferred embodiment of the present application.

In the figures: 1. Outer sleeve; 1a. First chute; 1b. Second chute; 10. First end face; 11. Second limiting mechanism; 12. Rounded corner; 2. Inner sleeve; 21. First limiting mechanism; 211. Bulge; 22. Connecting rod.

### Detailed Description of Embodiments

The present application will be further described below in conjunction with specific embodiments. It should be noted that under the premise of no conflict, embodiments or technical features described below can be arbitrarily combined to form a new embodiment.

In the description of the present application, it should be noted that an orientation or positional relationship indicated by an orientation term such as "center", "lateral", "longitudinal", "length", "width", "thickness", "upper", "lower", "front", "rear", "left", "right", "vertical", "horizontal", "top", "bottom", "inner", "outer", "clockwise" or "counterclockwise" is based on an orientation or positional relationship shown in accompanying drawings, is merely used for facilitating the description of the present application and simplifying the description, rather than indicating or implying that a device or element referred to should have a specific orientation or should be constructed and operated in a specific orientation, and could not be interpreted as limiting the specific scope of protection of the present application.

It should be noted that a term such as "first" or "second" in the description and the claims of the present application is used to distinguish similar objects, rather than to describe a specific sequence or order.

The terms such as "include/comprise" and "have", and any variations thereof in the description and the claims of the present application are intended to cover non-exclusive inclusions, for example, processes, methods, systems, products, or devices that include a series of steps or units are not necessarily limited to those explicitly listed steps or units, but can include other steps or units that are not explicitly listed or inherent to the processes, the methods, the products, or the devices.

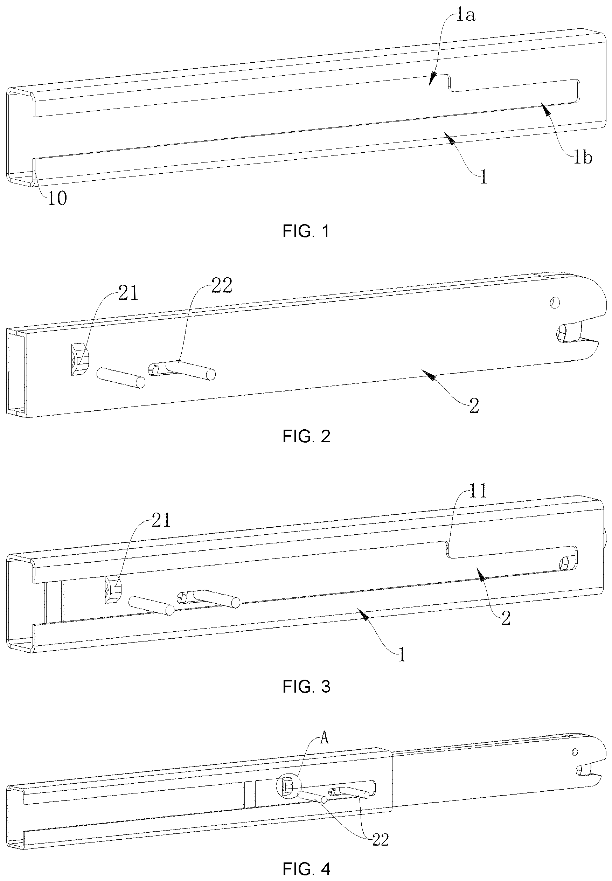

As shown in FIGS. 1-4, an ISOFIX telescopic mechanism according to the present application includes an outer sleeve 1 and an inner sleeve 2, where the inner sleeve 2 is adapted to slide relative to the outer sleeve 1, the inner sleeve 2 is provided with a first limiting mechanism 21, the outer sleeve 1 is provided with a first chute 1a, the first chute 1a extends to a first end face 10 of the outer sleeve 1, the first limiting mechanism 21 includes a bulge 211 projecting out of the first chute 1a, and the outer sleeve 1 is provided with a second limiting mechanism 11 adapted to abut against the bulge 211.

The first chute 1a extends to the first end face 10 of the outer sleeve 1, such that the first limiting mechanism 21 can be arranged on the inner sleeve 2 first, and then the inner sleeve 2 is inserted into the outer sleeve 1, thus enabling the assembly to be more convenient. The bulge 211 abuts against the second limiting mechanism 11 when the inner sleeve 2 slides to an end of a stroke, such that a sliding limit function is implemented, and the inner sleeve 2 can be prevented from falling off, thereby achieving a simple limiting structure.

More specifically, an end of the first chute 1a away from the first end face 10 is provided with a limiting surface, and the limiting surface forms the second limiting mechanism 11. The end of the first chute 1a is directly used as the second limiting mechanism 11, and other parts are not required, such that the structure is simplified.

Further, the inner sleeve 2 is provided with a connecting rod 22, the outer sleeve 1 is provided with a second chute 1b, the second chute 1b extends to the first end face 10 of the outer sleeve 1, and the connecting rod 22 penetrates through the second chute 1b. The second chute 1b extends to the first end face 10 of the outer sleeve 1, facilitating assembly of the connecting rod 22, the whole inner sleeve 2 is assembled and then directly inserted into the outer sleeve 1, and the inner sleeve 2 and the outer sleeve 1 can be quickly assembled.

More specifically, since the inner sleeve 2 needs to be pulled out in a direction of an anchor rod of a vehicle when a safety seat is mounted on a vehicle seat, the first end face 10 is located at an end away from the anchor rod of the vehicle, and the first limiting mechanism 21 is used to limit a sliding stroke of the inner sleeve 2 in the direction of the anchor rod of the vehicle.

The outer sleeve 1 is integrally formed, instead of a structure formed by clamping two half shells in the prior art, such that a higher structural strength is achieved.

Preferably, as shown in FIG. 4, the bulge 211 and the connecting rod 22 are arranged on the same surface of the inner sleeve 2 and at different heights, and the first chute 1a is in communication with the second chute 1b. The first chute 1a and the second chute 1b are combined to form a larger chute, thereby further simplifying the structure and making machining of the chute easier.

Preferably, the first limiting mechanism 21 is arranged between the first end face 10 and the connecting rod 22 in a length direction of the inner sleeve 2, and a length of the first chute 1a is less than a length of the second chute 1b. In this way, firstly, the length of the first chute 1a is reduced as much as possible, and an area of the chute is reduced, thereby guaranteeing a structural strength of the outer sleeve 1. Secondly, when the first limiting mechanism 21 abuts against the second limiting mechanism 11, the connecting rod 22 does not abut against a tail end of the second chute 1b, thereby protecting the connecting rod 22 to some extent.

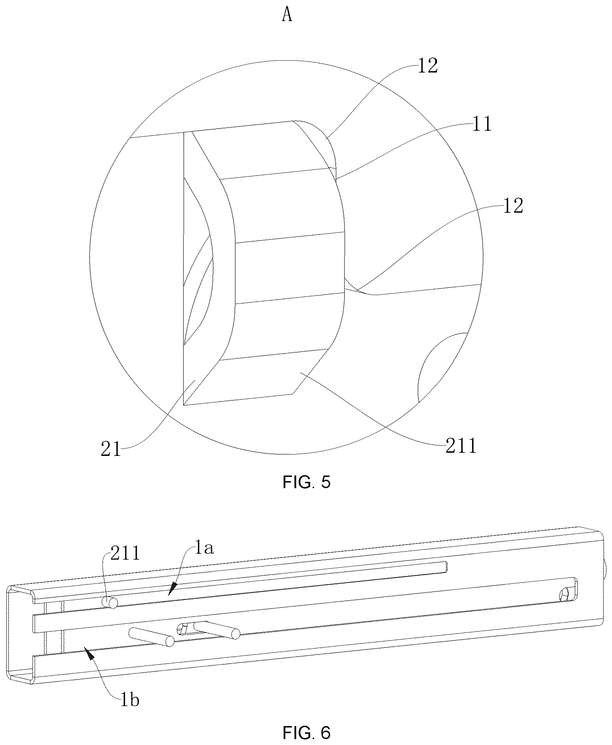

It can be understood that in other embodiments, as shown in FIG. 6, the first chute 1a and the second chute 1b may be provided at different heights. The first chute 1a and the second chute 1b may also be arranged on different side surfaces of the outer sleeve 1. A position, the length and a width of the first chute 1a may be adaptively adjusted according to a layout of other parts in the ISOFIX telescopic mechanism, and the first limiting mechanism 21 and the first chute 1a are synchronously adjusted.

Specifically, the first chute 1a and the second chute 1b are substantially elongated, and the structure is simple and easy to machine and shape. The end of the first chute 1a and an end of the second chute 1b are provided with rounded corners 12 through chamfering, so as to prevent a sharp corner from damaging the parts or scratching human bodies.

Preferably, the first limiting mechanism 21 and the inner sleeve 2 are integrally formed. Specifically, the first limiting mechanism 21 and the inner sleeve 2 may be integrally formed through welding or integral injection molding, and the first limiting mechanism 21 may also be formed by bending a tube wall of the inner sleeve 2, which can reduce the step of assembling the first limiting mechanism 21 on the inner sleeve 2, thereby further simplifying the structure of the ISOFIX telescopic mechanism and simplifying an assembly process.

Specifically, as shown in FIG. 5, the bulge 211 is a cambered bulge, which is relatively smooth and will not scratch human hands, especially relatively delicate skin of a child, so the safety is desirable. Similarly, the bulge 211 may be arranged in a cylindrical, frustum-shaped and other structures with a smooth curved surface.

The present application further provides a safety seat. The safety seat includes the ISOFIX telescopic mechanism, and has the advantages of a simple structure and more convenient assembly of the ISOFIX telescopic mechanism.

The basic principles, main features and advantages of the present application are described above. Those skilled in the art shall understand that the present application is not limited by the embodiments above, the embodiments above and the description merely illustrate the principle of the present application. The present application can have various changes and improvements without departing from the scope of the present application, and these changes and improvements shall fall within the scope of protection as claimed by the present application. The scope of protection as claimed by the present application is defined by the appended claims

## Claims

1. An international standards organization FIX (ISOFIX) telescopic mechanism, comprising an outer sleeve (1) and an inner sleeve (2), wherein the inner sleeve (2) is adapted to slide relative to the outer sleeve, the inner sleeve (2) is provided with a first limiting mechanism (21), the outer sleeve (1) is provided with a first chute (1a), **characterized in that** the first chute extends to a first end face (10) of the outer sleeve, the first limiting mechanism (21) comprises a bulge (211) projecting out of the first chute (1a), and the outer sleeve (1) is provided with a second limiting mechanism (11) adapted to abut against the bulge (211).

2. The ISOFIX telescopic mechanism according to claim 1, **characterized in that** an end of the first chute (1a) away from the first end face (10) is provided with a limiting surface, and the limiting surface forms the second limiting mechanism (11).

3. The ISOFIX telescopic mechanism according to claim 1, **characterized in that** the inner sleeve (2) is provided with a connecting rod (22), the outer sleeve (1) is provided with a second chute (1b), the second chute (1b) extends to the first end face (10) of the outer sleeve (1), and the connecting rod (22) penetrates through the second chute.

4. The ISOFIX telescopic mechanism according to claim 3, **characterized in that** the bulge (211) and the connecting rod (22) are arranged on the same surface of the inner sleeve (2) and at different heights, and the first chute (1a) is in communication with the second chute (1b).

5. The ISOFIX telescopic mechanism according to claim 4, **characterized in that** the first limiting mechanism (21) is arranged between the first end face (10) and the connecting rod (22) in a length direction of the inner sleeve (2), and a length of the first chute (1a) is less than a length of the second chute (1b).

6. The ISOFIX telescopic mechanism according to any one of claims 3-5, **characterized in that** the first chute (1a) and the second chute (1b) are substantially elongated, and an end of the first chute and an end of the second chute (1b) are provided with rounded corners (12) through chamfering.

7. The ISOFIX telescopic mechanism according to any one of claims 1-5, **characterized in that** the first limiting mechanism (21) and the inner sleeve (2) are integrally formed.

8. The ISOFIX telescopic mechanism according to any one of claims 1-5, **characterized in that** the bulge (211) is a cambered bulge.

9. The ISOFIX telescopic mechanism according to any one of claims 1-5, **characterized in that** the first end face (10) is located at an end away from an anchor rod of a vehicle, and the outer sleeve (1) is integrally formed.

10. A safety seat, **characterized by**: comprising an ISOFIX telescopic mechanism according to any one of claims 1-9.

## Patentansprüche

1. Teleskopmechanismus der internationalen Normungsorganisation FIX (ISOFIX), umfassend eine Außenhülse (1) und eine Innenhülse (2), wobei die Innenhülse (2) zum Schieben relativ zur Außenhülse angepasst ist, wobei die Innenhülse (2) mit einem ersten Begrenzungsmechanismus (21) versehen ist, die Außenhülse (1) mit einer ersten Rutsche (1a) versehen ist, **dadurch gekennzeichnet, dass** sich die erste Rutsche bis zu einer ersten Stirnfläche (10) der Außenhülse erstreckt, der erste Begrenzungsmechanismus (21) eine Wölbung (211) umfasst, die aus der ersten Rutsche (1a) hervorsteht, und die Außenhülse (1) mit einem zweiten Begrenzungsmechanismus (11) versehen ist, der zum Anliegen an der Wölbung (211) angepasst ist.

2. ISOFIX-Teleskopmechanismus nach Anspruch 1, **dadurch gekennzeichnet, dass** ein von der ersten Stirnfläche (10) wegliegendes Ende der ersten Rutsche (1a) mit einer Begrenzungsfläche versehen ist, und die Begrenzungsfläche den zweiten Begrenzungsmechanismus (11) bildet.

3. ISOFIX-Teleskopmechanismus nach Anspruch 1, **dadurch gekennzeichnet, dass** die Innenhülse (2) mit einer Verbindungsstange (22) versehen ist, die Außenhülse (1) mit einer zweiten Rutsche (1b) versehen ist, die zweite Rutsche (1b) sich bis zur ersten Stirnfläche (10) der Außenhülse (1) erstreckt und die Verbindungsstange (22) durch die zweite Rutsche hindurchdringt.

4. ISOFIX-Teleskopmechanismus nach Anspruch 3, **dadurch gekennzeichnet, dass** die Wölbung (211) und die Verbindungsstange (22) auf derselben Fläche der Innenhülse (2) und in unterschiedlichen Höhen angeordnet sind, und die erste Rutsche (1a) in Verbindung mit der zweiten Rutsche (1b) steht.

5. ISOFIX-Teleskopmechanismus nach Anspruch 4, **dadurch gekennzeichnet, dass** der erste Begrenzungsmechanismus (21) zwischen der ersten Stirnfläche (10) und der Verbindungsstange (22) in einer Längenrichtung der Innenhülse (2) angeordnet ist, und eine Länge der ersten Rutsche (1a) kleiner als eine Länge der zweiten Rutsche (1b) ist.

6. Der ISOFIX-Teleskopmechanismus nach einem der Ansprüche 3 bis 5, **dadurch gekennzeichnet, dass** die erste Rutsche (1a) und die zweite Rutsche (1b) im Wesentlichen verlängert sind und ein Ende der ersten Rutsche und ein Ende der zweiten Rutsche (1b) durch Anfasen mit abgerundeten Ecken (12) versehen sind.

7. ISOFIX-Teleskopmechanismus nach einem der Ansprüche 1 bis 5, **dadurch gekennzeichnet, dass** der erste Begrenzungsmechanismus (21) und die Innenhülse (2) integral ausgebildet sind.

8. ISOFIX-Teleskopmechanismus nach einem der Ansprüche 1 bis 5, **dadurch gekennzeichnet, dass** die Wölbung (211) eine gebogene Wölbung ist.

9. ISOFIX-Teleskopmechanismus nach einem der Ansprüche 1 bis 5, **dadurch gekennzeichnet, dass** sich die erste Stirnfläche (10) an einem von einer Ankerstange eines Fahrzeugs entfernten Ende befindet und die Außenhülse (1) integral ausgebildet ist.

10. Sicherheitssitz, **dadurch gekennzeichnet, dass** er einen ISOFIX-Teleskopmechanismus nach einem der Ansprüche 1 bis 9 umfasst.

## Revendications

1. Mécanisme télescopique selon l'organisation internationale de normalisation FIX (ISOFIX), comportant un manchon extérieur (1) et un manchon intérieur (2), dans lequel le manchon intérieur (2) est adapté pour coulisser par rapport au manchon extérieur, le manchon intérieur (2) est pourvu d'un premier mécanisme de limitation (21), le manchon extérieur (1) est pourvu d'une première goulotte (1a), **caractérisé en ce que** la première goulotte s'étend jusqu'à une première face d'extrémité (10) du manchon extérieur, le premier mécanisme de limitation (21) comporte un renflement (211) faisant saillie hors de la première goulotte (1a), et le manchon extérieur (1) est pourvu d'un deuxième mécanisme de limitation (11) adapté pour venir en butée contre le renflement (211).

2. Mécanisme télescopique ISOFIX selon la revendication 1, **caractérisé en ce qu'**une extrémité de la première goulotte (1a) éloignée de la première face d'extrémité (10) est pourvue d'une surface de limitation, et la surface de limitation forme le deuxième mécanisme de limitation (11).

3. Mécanisme télescopique ISOFIX selon la revendication 1, **caractérisé en ce que** le manchon intérieur (2) est pourvu d'une bielle (22), le manchon extérieur (1) est pourvu d'une deuxième goulotte (1b), la deuxième goulotte (1b) s'étend jusqu'à la première face d'extrémité (10) du manchon extérieur (1), et la bielle (22) pénètre à travers la deuxième goulotte.

4. Mécanisme télescopique ISOFIX selon la revendication 3, **caractérisé en ce que** le renflement (211) et la bielle (22) sont agencés sur la même surface du manchon intérieur (2) et à des hauteurs différentes, et la première goulotte (1a) est en communication avec la deuxième goulotte (1b).

5. Mécanisme télescopique ISOFIX selon la revendication 4, **caractérisé en ce que** le premier mécanisme de limitation (21) est agencé entre la première face d'extrémité (10) et la bielle (22) dans une direction longitudinale du manchon intérieur (2), et une longueur de la première goulotte (1a) est inférieure à une longueur de la deuxième goulotte (1b).

6. Mécanisme télescopique ISOFIX selon l'une quelconque des revendications 3 à 5, **caractérisé en ce que** la première goulotte (1a) et la deuxième goulotte (1b) sont sensiblement allongées, et une extrémité de la première goulotte et une extrémité de la deuxième goulotte (1b) sont pourvues d'angles arrondis (12) par chanfreinage.

7. Mécanisme télescopique ISOFIX selon l'une quelconque des revendications 1-5, **caractérisé en ce que** le premier mécanisme de limitation (21) et le manchon intérieur (2) sont formés d'un seul tenant.

8. Mécanisme télescopique ISOFIX selon l'une quelconque des revendications 1 à 5, **caractérisé en ce que** le renflement (211) est un renflement cambré.

9. Mécanisme télescopique ISOFIX selon l'une quelconque des revendications 1-5, **caractérisé en ce que** la première face d'extrémité (10) est située à une extrémité éloignée d'une tige d'ancrage d'un véhicule, et le manchon extérieur (1) est formé d'une seule pièce.

10. Siège de sécurité, **caractérisé en ce que** : il comporte un mécanisme télescopique ISOFIX selon l'une quelconque des revendications 1 à 9.
